Europäisches Patentamt

European Patent Office

Office européen des brevets

(11) Publication number: **0 277 785**
**A2**

(12) # EUROPEAN PATENT APPLICATION

(21) Application number: **88300800.5**

(22) Date of filing: **29.01.88**

(51) Int. Cl.⁴: **G 01 H 11/08**
**G 10 K 11/30**

(30) Priority: **02.02.87 US 9468**

(43) Date of publication of application:
**10.08.88 Bulletin 88/32**

(84) Designated Contracting States:
**AT CH DE FR GB LI**

(71) Applicant: **THE BOARD OF TRUSTEES OF THE LELAND STANFORD JUNIOR UNIVERSITY**
**Stanford, CA 94305 (US)**

(72) Inventor: **Khuri-Yakub, Butrus Thomas**
**4151 Donals Drive**
**Palo Alto California 94306 (US)**

**Chou, Ching Hua**
**456 Fernando Avenue**
**Palo Alto California 94306 (US)**

(74) Representative: **Cross, Rupert Edward Blount et al**
**BOULT, WADE & TENNANT 27 Furnival Street**
**London EC4A 1PQ (GB)**

(54) **Acoustic transducer.**

(57) An acoustic transducer-lens system includes a buffer rod (11), a shear polarized piezoelectric material layer (12) coupled to one end (13) of the buffer rod (11) and a lens (16) formed at the other end (14) of said rod (11), cooperating to launch longitudinal acoustic waves from the lens (16).

FIG.-4

**Description**

## ACOUSTIC TRANSDUCER

This invention relates to an acoustic transducer, and particularly to an acoustic tranducer-lens system for use in acoustic microscopes.

Conventional acoustic transducer-lens systems have been longitudinal arrangements including a layer of longitudinally polarized piezoelectric material attached to or deposited on one end of a buffer rod with a spherical lens formed at the other end of the buffer rod. Spherical lenses work very well for imaging applications and material characterizations.

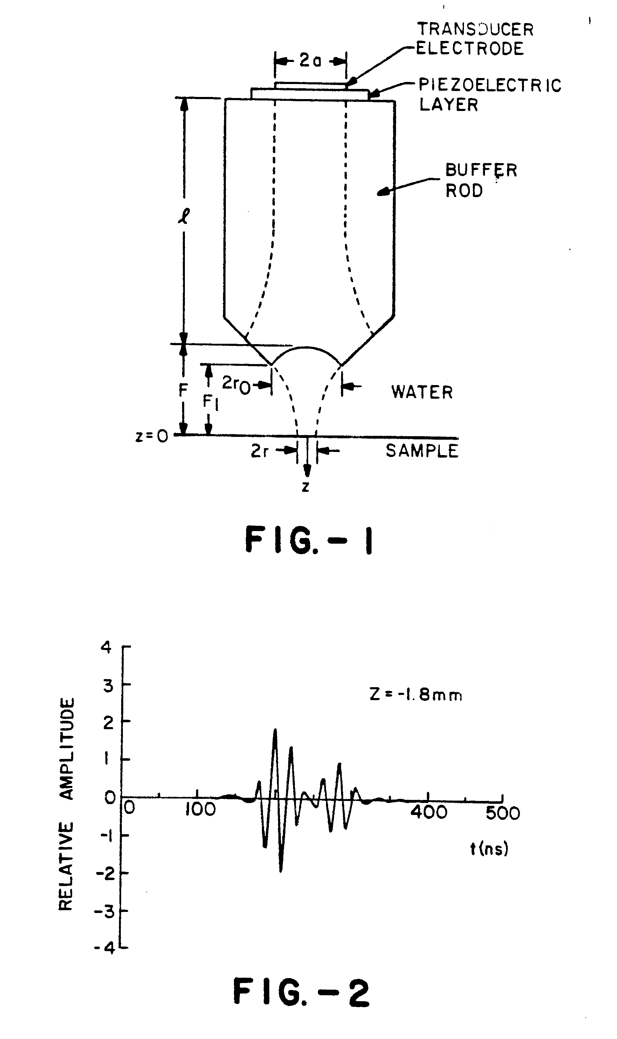

A typical prior art longitudinal acoustic transducer-lens system is shown in Figure 1 of the drawings. For surface imaging applications, the acoustic longitudinal waves generated by the longitudinal transducer propagate through the buffer rod and are focused at the surface of the sample by the lens. In order to obtain a low sidelobe level, the buffer rod length is chosen to correspond to S=1 where

$$S = \lambda \ell / a^2$$

where $\lambda$ is the wavelength of the longitudinal wave in the buffer rod, $\ell$ is the length of the buffer rod, and a is the radius of the transducer.

Bringing the lens closer to the sample (defocusing) induces surface acoustic waves which give quantitative information about the material properties such as surface wave velocity and residual stress. It is important to excite surface wave efficiently for material characterization. To evaluate the efficiency of surface wave excitation one looks at the impulse response of the transducer-lens system in the time domain.

Figure 2 shows the theoretical results of the main impulse response of a longitudinal transducer-lens system with the buffer rod length corresponding to S=1 at the center frequency of 50MHz when defocused -1.8mm. The diameter of the lens is 4.5mm and the F-number is 1.65. The sample for which the calculations were made was hot pressed silicon nitride. It is clear that the received signal consists of a specularly-reflected signal which comes first and a surface-wave component which arrives second and that the surface-wave signal is weaker than the specularly-reflected signal.

In order to increase the relative amplitude of the surface wave signal, it is helpful to minimize the acoustic illumination at the center region of the lens. One way of doing this is to place the lens in the near-field of the transducer, at a location where the on-axis field strength is at a minimum such as for S=0.5.

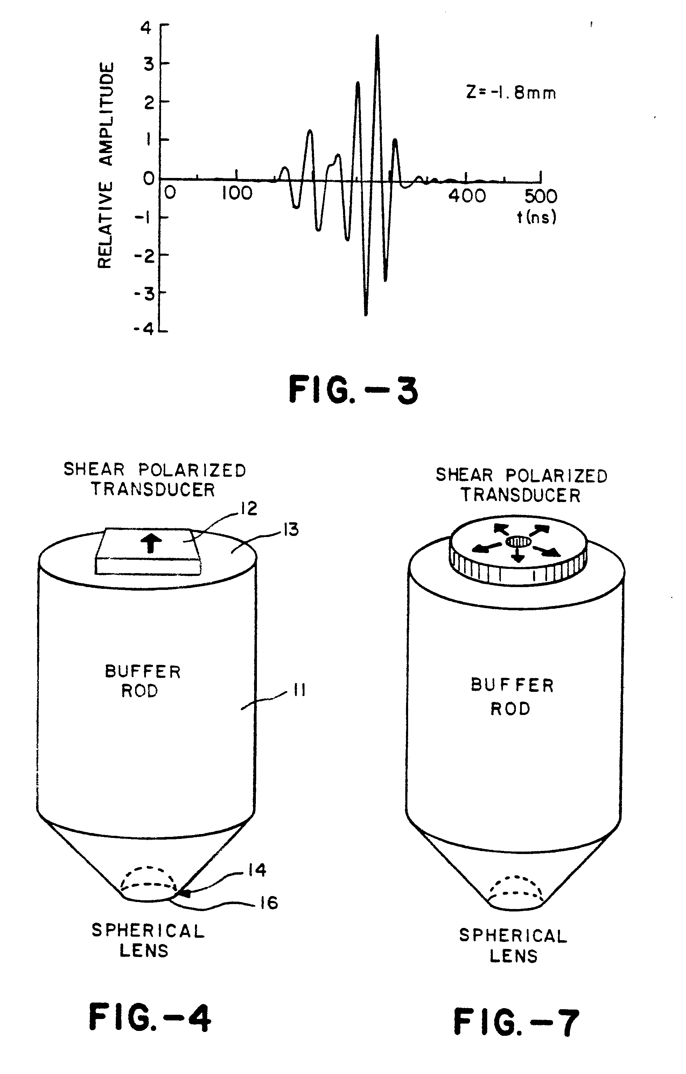

Figure 3 shows the theroretical results for time domain impulse response of a longitudinal transducer-lens system constructed with a buffer length corresponding to S=0.6 at a center frequency of 40MHz and a focusing distance of -1.8mm. The lens diameter is 3.5mm and the F number is 1.65. The sample is hot pressed silicon nitride. Surface wave excitation efficiency with respect to the specular reflection has been increased compared to that of the transducer-lens system of Figure 2.

In another class of problems, it is desired to measure the anisotropy in anisotropic samples by using acoustic metrology. In these applications the use of a spherically focused, uniformly illuminated transducer is not desired because it averages anisotropy of the material around an axis normal to the surface of the sample. For this application, cylindrical lenses are preferred to spherical lenses because the anisotropy can be measured accurately but at an expense: loss in spacial resolution. Cylindrical lenses are typically sharply focused in one direction and unfocused in the other direction. Thus, the focal spot is very long and thin along the axis of the cylindrical lens.

According to this invention there is provided an acoustic transducer-lens system, for use in an acoustic microscope to excite surface waves in a selected region of a sample immersed in a coupling medium which couples the lens of the system to the sample, comprising a buffer rod; a layer of piezoelectric material coupled to one end of said rod; means to apply an electric field to said layer to generate acoustic waves which travel into said rod; and a lens formed at the other end of said rod, which lens is illuminated by said acoustic waves and excites by mode conversion at the lens-coupling medium interface bulk acoustic waves which excite surface waves in said sample region, characterised in that said layer of piezoelectric material is shear polarised whereby the acoustic waves which are generated and travel in said rod are shear acoustic waves.

In the system of the invention the shear polarized piezoelectric material layer excites shear polarized waves at one end of the buffer rod, while the lens excites longitudinal waves in the coupling medium by mode conversion at selected locations on the lens.

This invention will now be described by way of example with reference to the drawings in which:-

Figure 1 is a schematic diagram of a typical prior art longitudinally polarized acoustic transducer-lens system;

Figure 2 shows the impulse response of the lens system of Figure 1;

Figure 3 shows the impulse response of the lens system of Figure 1 with the acoustic illumination at the center of the lens minimized;

Figure 4 shows a linearly shear polarized acoustic transducer-lens system in accordance with the invention;

Figure 5 is a schematic view showing the shear waves at the lens within the buffer rod of the system of Figure 4;

Figure 6 is a schematic view showing the coupling at the face of a spherical lens excited by the shear waves of Figure 5;

Figure 7 shows a radially shear polarized acoustic transducer-lens system in accordance with the invention;

Figure 8 shows the acoustic field distribution along the direction of polarization in a plane at 0.3mm defocus, for a linearly-polarized shear acoustic transducer-lens system; and

Figure 9 shows the impulse response of a radially polarized shear acoustic transducer-lens system.

Figures 1 to 3 have been described above, and will not be described again.

Figure 4 shows a shear-polarized acoustic transducer-lens system in accordance with the invention, including a buffer rod 11 of quartz, sapphire or silicon, with a shear polarized piezoelectric material layer 12 deposited or suitably attached to one end 13 of the buffer rod 11. The opposite end 14 of the buffer rod 11 is ground or otherwise formed into a spherical lens 16. Application of voltage across the shear polarized piezoelectric material layer 12 excites shear polarized waves in the buffer rod as shown by the arrow, which travel downwardly to the lens.

The lens 16 is illuminated by the shear polarized acoustic waves 18, Figure 5. Mode conversion at the buffer rod-coupling medium interface excites longitduinal waves in the coupling medium, usually water, as shown schematically in Figure 6. Mode conversion will only couple longitudinal waves into the coupling medium at selected locations of the lens. At point "a" no mode conversion takes place because of the normal incidence of the shear wave at the interface. At locations "b" and "c" no longitudinal waves are mode converted because the shear wave is incident on the interface as a shear horizontal polarized wave which couples no energy into longitudinal waves in the coupling medium, and is wholly reflected inside the buffer rod. However, at locations "d" and "e" the shear wave is incident as a shear vertical polarized wave and couples energy into the coupling medium. Thus as shown schematically in Figure 6, the pattern of excitation of longitduinal waves in the coupling medium is directional in that the energy is excited preferentially along one axis (in the direction of the shear polarization) and is totally absent along the orthogonal axis. With such a transducer-lens combination there is a focal spot with spacial resolution determined by the spherical lens and undirectionally given by the mode converstion from shear into longitudinal waves at the buffer rod coupling medium interface. With such a lens it is possible to measure anisotropy with a much better spacial resolution than is presently available with a cylindrical lens.

The deposited piezoelectric layer may be of, for example, zinc oxide with shear polarization and capable of operating at frequencies in the tens of gigahertz range. Thus the system is not restricted to low frequencies but can also be operated at any frequency of operation where acoustic microscopes are being made.

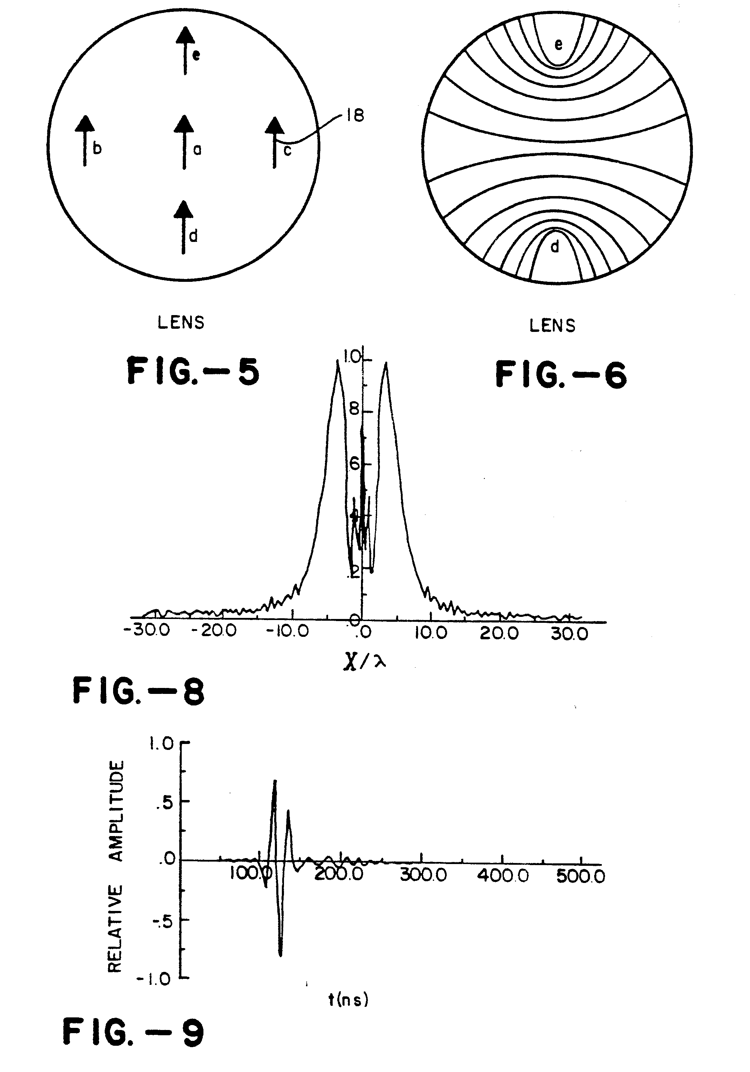

Another configuration of an acoustic tranducer-lens system in accordance with the invention is shown in Figure 7. Here the configuration of the peizoelectric material layer is one which provides radial shear polarized waves shown by the radial arrows in the buffer rod by application of a voltage to the transducer. With such a lens illumination, there are no longitudinal waves converted in the coupling medium at the center of the lens. Away from the center of the lens more energy is coupled into the coupling medium by mode conversion.[ ] This is because the incidence angle at different locations of the interface varies with r/F where r is the radial distance from the center of the lens and F is the focal length of the lens. If this transducer-lens system is used to measure a sample we find that as the transducer is brought closer to the sample, surface acoustic waves are excited and specular reflections from the sample are very weak and almost nonexistent. With such a transducer acoustic microscopy measurements of surface wave velocity changes with spacial resolution corresponding to a few wavelengths of the longitudinal wave in water may be made. In other words, because there are no normal components in the acoustic beam in the coupling medium, a slight defocus (the lens closer to the sample) allows the excitation of surface waves. This excitation is shown in Figure 8 where amplitude of the acoustic field as a function of distance in terms of $x/\lambda$ is shown at a focal distance of -0.3 mm at f=50 mHz. It is seen that the distance between peaks is about 8 wavelengths providing a small spot size on the order of a few wavelengths.

The calculation for such a lens is shown in Figure 9 for a shear transducer-lens system with the frequency equal to 50 MHz defocused 1.8mm, the diameter being 2mm and F number 1.65. The sample is hot pressed silicon nitride. Figure 9 shows clearly that the specularly reflected signal is negligible compared to the surface wave component. This allows one to obtain a clean surface wave with little defocusing, which is very important for material characterization with high spacial resolution.

To take advantage of the "cleaner" surface wave excitation and anisotropic property of the shear transducer-lens system many novel applications can be expected such as measuring the surface wave velocity, residual stress and anisotropy of materials as well as film thickness and subsurface crack depth with good special resolution.

The polarized trandsducer 12 can be made such that both longitudinal and shear waves are excited in the buffer rod. Thus, both types of waves can be used to analyze a specimen and provide different temporal signals.

Thus there has been described a shear acoustic acoustic transducer-lens system for providing high efficiency surface wave excitation, which makes it possible to make quantitative measurements of surface wave velocity variations, anisotrophy, residual stress, surface defects with a spacial resolution of a few wavelengths of the longitudinal wave in the coupling medium (water).

**Claims**

1. An acoustic transducer-lens system, for use in an acoustic microscope to excite surface waves in a selected region of a sample immersed in a coupling medium which couples the lens of the system to the sample, comprising a buffer rod (11); a layer (12) of piezoelectric material coupled to one end (13) of said rod (11); means to apply an electric field to said layer (12) to generate acoustic waves which travel into said rod (11); and a lens (16) formed at the other end (14) of said rod (11), which lens is illuminated by said acoustic waves and excites by mode conversion at the lens-coupling medium interface bulk acoustic waves which excite surface waves in said sample region, characterised in that said layer (12) of piezoelectric material is shear polarised whereby the acoustic waves which are generated and travel in said rod (11) are shear acoustic waves.

2. A system as claimed in Claim 1, characterised in that the piezoelectric material layer (12) is linearly polarized, and voltage is applied by said means to apply to generate linearly polarized acoustic waves.

3. A system as claimed in Claim 1, characterised in that the piezoelectric material layer (12) is radially polarized, and voltage is applied by said means to apply to generate radially polarized acoustic waves.

4. A system as claimed in any preceding claim, characterised in that the lens (16) is symmetrical.

5. A system as claimed in any preceding claim, characterised in that the shear polarized layer (12) of piezoelectric material is also longitudinally polarized.

0277785

FIG.-1

FIG.-2

0277785

FIG. -3

FIG. -4

FIG. -7

0277785

LENS

# FIG.—5

LENS

# FIG.—6

$X/\lambda$

# FIG.—8

t(ns)

# FIG.—9